(19) Europäisches Patentamt / European Patent Office / Office européen des brevets

(11) **EP 4 752 757 A1**

(12) **EUROPEAN PATENT APPLICATION**

(43) Date of publication:
**03.06.2026 Bulletin 2026/23**

(51) International Patent Classification (IPC):
**G06F 17/11** (2006.01)    **G06N 5/01** (2023.01)
**G06N 7/01** (2023.01)

(21) Application number: **25218049.2**

(22) Date of filing: **24.11.2025**

(52) Cooperative Patent Classification (CPC):
**G06F 17/11; G06N 5/01; G06N 7/01**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **29.11.2024 JP 2024208932**

(71) Applicants:
• **FUJITSU LIMITED**
  **Kawasaki-shi, Kanagawa 211-8588 (JP)**
• **The Governing Council of the University of Toronto**
  **Toronto, Ontario M5G 0C6 (CA)**

(72) Inventors:
• **WATANABE, Yasuhiro**
  **Kawasaki-shi, 211-8588 (JP)**
• **TAMURA, Hirotaka**
  **Yokohama-shi, 223-0066 (JP)**
• **VALENCIA SANCHEZ, Rafael Alexander**
  **Toronto, M5S 1A1 (CA)**
• **ROSENTHAL, Jeffrey Seth**
  **Toronto, M5S 1A1 (CA)**
• **SHEIKHOLESLAMI, Ali**
  **Toronto, M5S 1A1 (CA)**

(74) Representative: **Haseltine Lake Kempner LLP**
**Cheapside House**
**138 Cheapside**
**London EC2V 6BJ (GB)**

(54) **DATA PROCESSING APPARATUS, COMPUTER PROGRAM, AND DATA PROCESSING METHOD**

(57) In executing trials each of which changes the value of a state variable included in state variable groups included in an evaluation function for a combinatorial optimization problem, a processing unit performs, based on evaluation function information on the evaluation function, a first process of determining a candidate for a first state variable whose value is to be changed in parallel for each state variable group, in each trial, with a first probability, performs, based on the evaluation function information, a second process of selecting one second state variable and determining whether to accept a change in the value thereof in parallel for each state variable group, in each trial, with a second probability, updates the value of the first state variable selected from the candidates determined by the first process, and updates the value of a second state variable whose change is accepted by the second process.

FIG. 1

EP 4 752 757 A1

**Description**

FIELD

The embodiments discussed herein relate to a data processing apparatus, a computer program, and a data processing method.

BACKGROUND

One of solution search methods for combinatorial optimization problems is the Markov-chain Monte Carlo (MCMC) method. In a solution search by serial trials of the MCMC method, one state variable is selected in each trial from the state variables included in an evaluation function of a combinatorial optimization problem, and a change (state transition) in the value of the selected state variable is accepted with an acceptance probability defined by the Metropolis method or the Gibbs method.

If state transitions are continuously rejected in each trial of the MCMC method, the state will remain unchanged for a long period of time. In order to prevent this, a method has been proposed for generating a sequence of samples that transition to different states at each trial (see, for example, Japanese Laid-open Patent Publication No. 2022-174616 and Japanese Laid-open Patent Publication No. 2023-149806). Such a method is called a rejection-free method (hereinafter, may be abbreviated as an RF method).

In the case where the acceptance probability is low in a solution search by the serial trials of the MCMC method, the RF method achieves a faster solution search than the serial trials of the MCMC method. On the other hand, in the case where the acceptance probability is high, the serial trials of the MCMC method are more advantageous in the solution search because the serial trials of the MCMC method have a lower computational cost per trial than the RF method.

SUMMARY

In one aspect, the present disclosure is directed to provide a data processing apparatus, a computer program, and a data processing method that enable fast search for solutions to combinatorial optimization problems.

In one aspect, there is provided a data processing apparatus including: a storage unit for storing evaluation function information on an evaluation function including a plurality of state variable groups for a combinatorial optimization problem; and a processing unit for, in executing a plurality of trials each of which is to change a value of one state variable included in the plurality of state variable groups: performing, based on the evaluation function information, a first process of determining a candidate for a first state variable whose value is to be changed in parallel for each of the plurality of state variable groups, in each trial, the first process being performed with a first probability calculated using a first degree of parallelism corresponding to a number of the plurality of state variable groups; performing, based on the evaluation function information, a second process of selecting one second state variable and determining whether to accept a change in a value of the one second state variable in parallel for each of the plurality of state variable groups, in each trial, the second process being performed with a second probability obtained by subtracting the first probability from 1; updating the value of the first state variable selected from candidates determined by the first process; and updating the value of a second state variable whose change is accepted by the second process.

BRIEF DESCRIPTION OF DRAWINGS

Reference will now be made, by way of example only, to the following drawings, in which:

FIG. 1 illustrates an example of a data processing apparatus according to a first embodiment;
FIG. 2 illustrates the relationships between an escape probability and each computational cost of solution search by serial trials of the MCMC method and by the RF method;
FIG. 3 illustrates an example of a data processing apparatus according to a second embodiment;
FIG. 4 illustrates an example of an overall control circuit and an arithmetic processing circuit;
FIG. 5 illustrates an example of update circuits;
FIG. 6 illustrates an example operation for Metropolis selection;
FIG. 7 is a timing chart illustrating an example of the operation timing of the data processing apparatus in a solution search;
FIG. 8 is a flowchart illustrating an example procedure for the process performed by the data processing apparatus according to the second embodiment;
FIG. 9 is a flowchart illustrating an example procedure for selection control to select a state variable whose value is to be changed;

FIG. 10 is a flowchart illustrating an example procedure for update control;

FIG. 11 is a flowchart illustrating an example procedure for the process performed by an arithmetic processing circuit;

FIG. 12 illustrates an example of a data processing apparatus according to a third embodiment;

FIG. 13 illustrates an example of update circuits of the data processing apparatus according to the third embodiment;

FIG. 14 is a flowchart illustrating an example procedure for the process performed by a data processing apparatus according to a fourth embodiment;

FIG. 15 is a flowchart illustrating an example procedure for update control according to a fifth embodiment;

FIG. 16 illustrates an example of a data processing apparatus according to a sixth embodiment;

FIG. 17 illustrates an example of primary selection circuits included in arithmetic processing circuits according to the sixth embodiment;

FIG. 18 illustrates an example of update circuits included in the arithmetic processing circuits according to the sixth embodiment;

FIG. 19 is a schematic diagram illustrating an example in which integer variables are used; and

FIG. 20 illustrates an example of the hardware of a data processing apparatus.

## DESCRIPTION OF EMBODIMENTS

Hereinafter, embodiments will be described with reference to the drawings.

[First Embodiment]

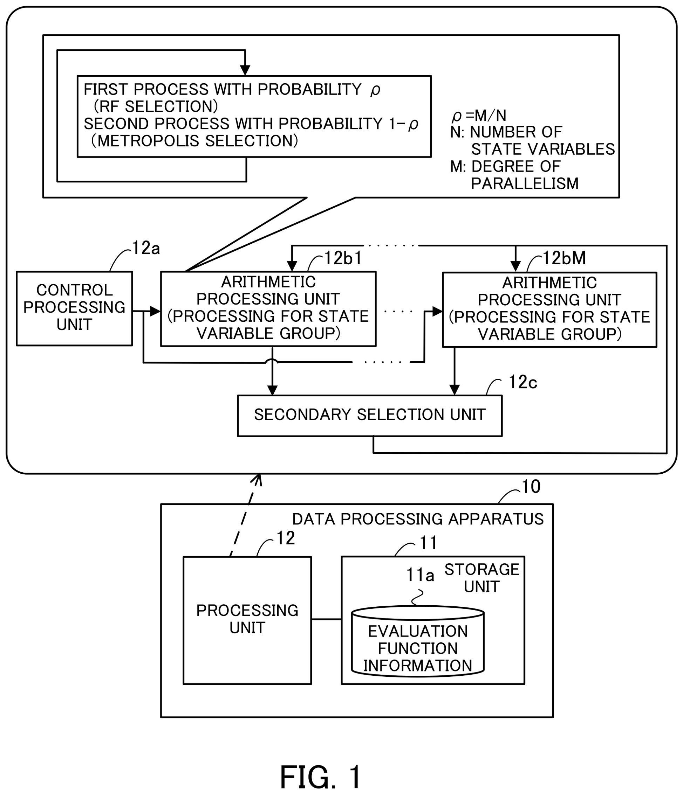

FIG. 1 illustrates an example of a data processing apparatus according to a first embodiment.

The data processing apparatus 10 searches for solutions to combinatorial optimization problems. The data processing apparatus 10 may be a client apparatus or a server apparatus. The data processing apparatus 10 may be referred to as a computer.

The data processing apparatus 10 of the first embodiment includes a storage unit 11 and a processing unit 12.

The storage unit 11 may include a volatile semiconductor memory such as a random access memory (RAM) or may include a non-volatile storage such as a hard disk drive (HDD) or a flash memory. The storage unit 11 may include both a volatile semiconductor memory and a non-volatile storage.

The storage unit 11 stores evaluation function information 11a on an evaluation function including a plurality of state variable groups for a combinatorial optimization problem. The combinatorial optimization problem is converted into, for example, an Ising-type evaluation function. The evaluation function may be referred to as an objective function or an energy function. The evaluation function includes a plurality of state variables and a plurality of weight coefficients. In the Ising-type evaluation function, the state variables are binary variables that each take a value 0 or 1. The state variables may be referred to as bits. A solution to the combinatorial optimization problem is represented by the values of the plurality of state variables. A solution that minimizes the value of the evaluation function corresponds to an optimal solution to the combinatorial optimization problem. Hereinafter, the value of the evaluation function is referred to as energy.

The Ising-type evaluation function is expressed by Expression (1).

$$E(x) = - \sum_{<i,j>} W_{ij} x_i x_j - \sum_i b_i x_i \qquad (1)$$

A state vector x represents a state of the Ising model with a plurality of state variables as elements. Expression (1) is an evaluation function formulated in a quadratic unconstrained binary optimization (QUBO) format. In the case of a problem that maximizes the energy, the signs of the evaluation function may be reversed.

The first term on the right side of Expression (1) is the sum of the products of the values of two state variables and a weight coefficient over all possible pairs of state variables selectable from all state variables without omission or repetition. The subscripts i and j are the indices of the state variables. Here, $x_i$ denotes the i-th state variable. $x_j$ denotes the j-th state variable. Hereinafter, it is assumed that the number of state variables is N. $W_{ij}$ is a weight coefficient indicating a weight or coupling strength between the i-th state variable and the j-th state variable. Note that $W_{ij} = W_{ji}$ and $W_{ii} = 0$. In the case where the number of state variables is N, the number of weight coefficients $W_{ij}$ is N × N.

The second term on the right side of Expression (1) is the sum of the products of the bias and value of each of all state variables. Here, $b_i$ denotes a bias for the i-th state variable. The evaluation function information 11a stored in the storage unit 11 includes the weight coefficients, the biases, and others included in the evaluation function as described above.

The plurality of state variable groups are obtained by, for example, dividing the plurality of state variables included in the evaluation function into a plurality of groups, either randomly or deterministically. Note that each of the plurality of state variable groups may be a group of state variables that have a one-hot constraint, among the N state variables included in the evaluation function. The state variable group that has the one-hot constraint is a group of state variables constrained such that only one of the state variables takes the value 1 and the other state variables take the value 0. An example in which state variable groups that have the one-hot constraint will be described in a sixth embodiment.

The storage unit 11 may further store calculation conditions for the solution search. In solution search by the RF method and in solution search by serial trials of the MCMC method employing the Metropolis method or the Gibbs method, techniques such as simulated annealing and replica exchange are applicable. In the case where the simulated annealing is used in solution search, for example, the calculation conditions may include a maximum value of the temperature parameter, a schedule for changing the temperature parameter, a minimum value of the temperature parameter, and a search termination condition.

The processing unit 12 may be implemented by an electronic circuit such as an application specific integrated circuit (ASIC) or a field programmable gate array (FPGA). Alternatively, the processing unit 12 may be implemented by a processor such as a central processing unit (CPU), a graphics processing unit (GPU), or a digital signal processor (DSP). The processor executes, for example, a program stored in a memory (which may be the storage unit 11) such as RAM. A set of processors may also be referred to as a multiprocessor or simply a "processor". The processing unit 12 may include a processor and an electronic circuit such as an ASIC or an FPGA.

In executing a plurality of trials each of which is to change the value of one state variable included in the plurality of state variable groups, the processing unit 12 performs, in each trial, a first process of determining a candidate for a first state variable whose value is to be changed in parallel for each of the state variable groups, based on the evaluation function information 11a. The processing unit 12 performs the first process with a first probability (hereinafter denoted as p). Hereinafter, the first process is referred to as RF selection. $\rho$ is calculated using a first degree of parallelism corresponding to the number of state variable groups. In the case where the plurality of state variable groups are obtained by dividing the N state variables included in the evaluation function into M groups, p is a value obtained by dividing M, which is the first degree of parallelism, by N, that is, M/N.

In the RF selection, the processing unit 12 determines, for each of the plurality of state variable groups, the above candidate by the RF method using, for example, the amounts of change in energy (the value of the evaluation function) caused by changing the values of the individual state variables included in that state variable group.

When the value of the state variable $x_i$ included in a certain state variable group changes to $1 - x_i$, the amount of change in the state variable $x_i$ is expressed as $\Delta x_i = (1 - x_i) - x_i = 1 - 2x_i$. Therefore, with respect to the evaluation function $E(x)$, the amount of change ($\Delta E_i$) in energy caused by the change in the state variable $x_i$ is expressed by the following Expression (2).

$$\Delta E_i = E(x)|_{x_i \to 1 - x_i} - E(x) = -\Delta x_i \left( \sum_j W_{ij} x_j + b_i \right) = -\Delta x_i h_i \quad (2)$$

Here, $h_i$ is referred to as a local field (LF). A change in $h_i$ caused by changing the value of $x_j$ is expressed as $\Delta h_i^{(j)} = W_{ij} \Delta x_j$. The processing unit 12 may hold $h_i$ with respect to $x_i$, and update $h_i$ using the above $\Delta h_i^{(j)}$ when the value of $h_i$ changes.

In the RF method, the index = j of a candidate state variable whose value is to be changed in a certain divided group is expressed by the following Expression (3) using $\Delta E_i$ with respect to $x_i$ included in that divided group.

$$j = \mathrm{argmin}_i \left[ \max(0, \Delta E_i) + T log\big( -log(r_i) \big) \right] \quad (3)$$

In Expression (3), $r_i$ is a uniform random number in the range of $0 < r_i < 1$, generated corresponding to $\Delta E_i$. T is the value of the temperature parameter. The max operator takes the maximum value among its arguments. $\mathrm{argmin}_i$ indicates i that minimizes the argument.

In addition, the processing unit 12 performs, in each trial, a second process of selecting one second state variable and determining whether to accept a change in the value of the selected second state variable in parallel for each of the plurality of state variable groups, based on the evaluation function information 11a, the second process being performed with a second probability (hereinafter, referred to as 1 - p) obtained by subtracting p from 1. Hereinafter, the second process is referred to as Metropolis selection.

In the Metropolis selection, the processing unit 12 determines whether to accept a change in the value of the second state variable, for example, according to the acceptance probability of the change in the value of the second state variable based on the Metropolis method or the Gibbs method.

In the Metropolis method and the Gibbs method, in a neighborhood search for a transition from a certain state to another state having lower energy than the certain state, not only a transition to a lower-energy state but also a transition to a higher-energy state is stochastically accepted. The acceptance probability $A_i$ for a change in the value of the state variable that causes $\Delta E_i$ is expressed by Expression (4).

$$A_i = \begin{cases} \min[1, \exp(-\beta \Delta E_i] & \text{Metropolis} \\ 1/[1 + \exp(\beta \Delta E_i)] & \text{Gibbs} \end{cases} \tag{4}$$

$\beta$ is the reciprocal ($\beta = 1/T$) of the temperature parameter T (T > 0), and is called an inverse temperature. The min operator takes the minimum value among its arguments. The upper part on the right side of Expression (4) corresponds to the Metropolis method. The lower part on the right side of Expression (4) corresponds to the Gibbs method.

The reason why the RF selection is performed with p calculated using the first degree of parallelism and the Metropolis selection is performed with 1 - p will be described later.

The processing unit 12 updates the value of a first state variable selected from the candidates determined by the RF selection. For example, the processing unit 12 is able to select the first state variable based on evaluation values (hereinafter referred to as scores) of the candidates determined by the RF selection. As the score, $\max(0, \Delta E_j) + T\log(-\log(r_j))$ in Expression (3) may be used. The candidate having the smallest score is selected as the first state variable. As a result, it is possible to cause a state transition that is able to reduce the energy more than others.

The processing unit 12 also updates the value of the second state variable that is permitted to change its value by the Metropolis selection. In the case where a plurality of second state variables are permitted to change their values in the plurality of state variable groups by the Metropolis selection, the processing unit 12 randomly selects one second state variable and updates the value thereof, for example.

In the example of FIG. 1, the processing unit 12 includes a control processing unit 12a, M arithmetic processing units 12b1 to 12bM, and a secondary selection unit 12c.

The control processing unit 12a controls the solution search. For example, the control processing unit 12a controls the value of T included in Expression (3) and the value of $\beta$ included in Expression (4), controls switching between the RF selection and the Metropolis selection according to the probability p, and performs other controls.

The arithmetic processing units 12b1 to 12bM are provided in the same number as the first degree of parallelism (M), and process the state variable groups in parallel. In the case where the plurality of state variable groups are obtained by dividing the N state variables included in the evaluation function into M, each of the arithmetic processing units 12b1 to 12bM handles N/M state variables.

In the RF selection, each of the arithmetic processing units 12b1 to 12bM determines the above-described candidate by performing the calculation of Expression (3) using the above-described amounts of change caused by changing the values of the individual state variables included in the assigned state variable group.

In the Metropolis selection, each of the arithmetic processing units 12b1 to 12bM selects one second state variable per trial from the assigned state variable group. For example, each of the arithmetic processing units 12b1 to 12bM selects the second state variable corresponding to the index specified by the control processing unit 12a. Then, each of the arithmetic processing units 12b1 to 12bM determines whether to accept a change in the value of the second state variable, according to the acceptance probability based on the Metropolis method or the Gibbs method presented in Expression (4), using the above-described amount of change caused by changing the value of the selected second state variable.

The arithmetic processing units 12b1 to 12bM also update the value of the first state variable or the second state variable selected by the secondary selection unit 12c.

In the RF selection, the secondary selection unit 12c selects one first state variable from among the candidates determined by the arithmetic processing units 12b1 to 12bM, based on the above-described scores. In the Metropolis selection, in the case where a plurality of second state variables are permitted to change their values by the arithmetic processing units 12b1 to 12bM, the secondary selection unit 12c randomly selects one second state variable, for example. The control processing unit 12a may execute the function of the secondary selection unit 12c.

(Reason why RF selection is performed with p calculated using first degree of parallelism and Metropolis selection with 1 - p)

In the solution search by serial trials of the MCMC method using the Metropolis selection as described above, the probability (hereinafter, referred to as an escape probability) $\alpha$ that a state transitions from the current state to a different state is expressed by the following Expression (5).

$$\alpha = \frac{1}{N} \sum_{i=1}^{N} A_i \qquad (5)$$

In Expression (5), $A_i$ is the acceptance probability presented in Expression (4).

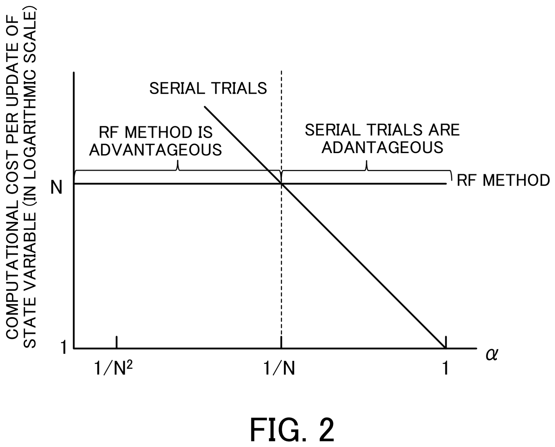

FIG. 2 illustrates the relationships between an escape probability and each computational cost of solution search by serial trials of the MCMC method and by the RF method. The horizontal axis represents the escape probability ($\alpha$), and the vertical axis represents the computational cost (in logarithmic scale) per update of a state variable. The solution search by the RF method includes the RF selection as described above.

In FIG. 2, the computational cost (equivalent to the computational cost of one computation using $\Delta E_i$ in the RF method) of determining once whether to accept a change in the value of $x_i$, using $\Delta E_i$ in the serial trials is set to 1. The computational cost of the solution search by the RF method is constant at N.

As seen in FIG. 2, in the case where $\alpha$ is smaller than 1/N, the computational cost of solution search by the RF method is less than that by the serial trials. Therefore, the solution search by the RF method is more advantageous than that by the serial trials. In the case where a solution is trapped in a local solution, $\alpha$ becomes small, and in some cases $\alpha \ll$ 1/N.

In the case where $\alpha$ is larger than 1/N, the computational cost of the solution search by the RF method is greater than that of the solution search by the serial trials. Therefore, the solution search by the serial trials is more advantageous than that by the RF method. In the case where there are k (> 1) escape destinations, $\alpha$ is greater than or equal to k/N, and thus greater than 1/N.

As described above, it is possible to determine based on $\alpha$ which is more advantageous, the solution search by the RF method or the solution search by the serial trials. However, as seen in Expression (5), in order to obtain $\alpha$, the exponential function operation is performed N times and the accumulation operation is performed N times, thereby making it difficult to reduce the total computational cost.

For example, the following literature proposes a method in which, without calculating $\alpha$, selection by the informed importance tempering (IIT) method, which is a generalized RF method, is serially executed with a probability p, and serial trials using the Metropolis selection are performed with a probability 1 - p.

Literature: Guanxun Li, Aaron Smith and Quan Zhou, "Importance is Important: A Guide to Informed Importance Tempering Methods", arXiv:2304.06251v1 [stat.CO], April 13, 2023

In the case of p = A/N (where A is a predetermined constant greater than 0 and smaller than or equal to N), the inequality represented by the following Expression (6) holds for the expected value of the computational cost K(x).

$$\mathbb{E}[K(x)] \leq (A+1) min\left\{\frac{N}{A}, \frac{1}{\alpha}\right\} \qquad (6)$$

The left side of Expression (6) is the expected value of K(x). As seen in Expression (6), the expected value of K(x) is on the order of the computational cost (N/A) of the solution search by the RF method or the computational cost (1/$\alpha$) by the serial trials, whichever is smaller.

In the case of A = 1, Expression (6) is expressed by the following Expression (7).

$$\mathbb{E}[K(x)] \leq 2 min\left\{N, \frac{1}{\alpha}\right\} \qquad (7)$$

In the case of A = 1, regardless of the escape probability ($\alpha$), the expected value of K(x) is less than or equal to twice the smaller one of the computational cost (N) of the solution search by the RF method and the computational cost (1/$\alpha$) by the serial trials. That is, an optimal selection method is automatically selected, even without calculating $\alpha$ to select the RF selection or the Metropolis selection.

As described above, the data processing apparatus 10 of the first embodiment performs processing on a plurality of state variable groups in parallel. By doing so, it becomes possible to handle the computational cost K(x) in M parallel, and there is a possibility of increasing the processing speed (shortening the computation time).

In the case where the N state variables of the evaluation function is divided into M and are processed, the total computation time is determined by the computational cost for each divided group. When serial trials are performed in M parallel, the escape probability is $1 - (1 - \alpha)^M \approx M\alpha$ in the case of $\alpha \ll 1$. Therefore, by applying the following Expression (8), in which N is replaced with N/M, $\alpha$ is replaced with M$\alpha$, and p is replaced with M/N in Expression (7), a speedup proportional to the degree of parallelism (M) is achieved.

$$\mathbb{E}[K_M(x)] \lesssim 2min\left\{ N/M, \frac{1}{M\alpha} \right\} = \mathbb{E}[K_M(x)]/M \qquad (8)$$

That is, by performing the RF selection with the probability p = M/N and performing the Metropolis selection with the probability 1 - p, the speedup is achieved as described above, and the solution search is performed for combinatorial optimization problems at high speed.

As described above, in the data processing apparatus 10 of the first embodiment, the storage unit 11 stores the evaluation function information 11a on an evaluation function including a plurality of state variable groups for a combinatorial optimization problem. The processing unit 12 performs, based on the evaluation function information 11a, RF selection for determining a candidate for a first state variable whose value is to be changed in parallel for each of the plurality of state variable groups, in each trial, the RF selection being performed with a first probability (p) calculated using a first degree of parallelism corresponding to the number of state variable groups. In addition, the processing unit 12 performs, based on the evaluation function information 11a, Metropolis selection for selecting one second state variable and determining whether to accept a change in its value in parallel for each of the plurality of state variable groups, in each trial, the Metropolis selection being performed with a second probability (1 - p). Further, the processing unit 12 updates the value of the first state variable selected from the candidates determined by the RF selection, and updates the value of the second state variable that is permitted to change its value by the Metropolis selection. As a result, for the reasons described above, a speedup proportional to the degree of parallelism (M) is achieved, thereby making it possible to perform the solution search for combinatorial optimization problems at high speed.

In large-scale combinatorial optimization problems, the time (referred to as the time for performing initial relaxation, an initial relaxation phase, or another) needed to make a transition from a state with high initial energy to a low-energy state in which an optimal solution is expected to be found is long. The data processing apparatus 10 of the present embodiment achieves the above-described speedup, which makes it possible to complete the initial relaxation in a short time.

In addition, there are combinatorial optimization problems in which the acceptance probability is large irrespective of the initial relaxation phase. For example, there are problems in which a large number of local solutions are distributed in a flat energy landscape, and problems in which the acceptance probability changes irregularly and significantly during the search process. In searching for a solution to such a problem, the use of the RF selection under a high acceptance probability lowers the efficiency. However, the data processing apparatus 10 of the present embodiment improves the computational efficiency by performing the RF selection and the Metropolis selection according to the above-described probabilities (p, 1 - p).

The above-described data processing apparatus 10 is expected to be useful as one means to obtain solutions at high speed when solving various problems in modern society that are convertible into combinatorial optimization problems.

The data processing apparatus 10 may also have a function of sampling states in the middle of a solution search. An example of the sampling function will be described in a second embodiment.

[Second Embodiment]

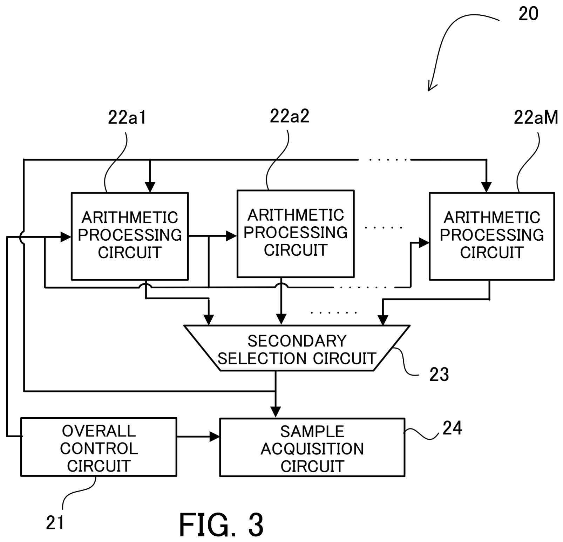

FIG. 3 illustrates an example of a data processing apparatus according to the second embodiment.

The data processing apparatus 20 includes an overall control circuit 21, arithmetic processing circuits 22a1, 22a2, ..., and 22aM, a secondary selection circuit 23, and a sample acquisition circuit 24. These circuits may be implemented by an electronic circuit such as an ASIC or an FPGA. Alternatively, these circuits may be implemented using one or more processors or processor cores.

In FIG. 3, a storage unit that stores evaluation function information on an evaluation function of a combinatorial optimization problem and others is not illustrated.

The overall control circuit 21 has the same functions as the control processing unit 12a of the first embodiment. The overall control circuit 21 controls RF selection or Metropolis selection executed by the arithmetic processing circuits 22a1 to 22aM. For example, the overall control circuit 21 controls the temperature parameter (T) used by the arithmetic processing circuits 22a1 to 22aM, controls switching between two types of solution searches according to a probability p (hereinafter, referred to as mode switching control), and performs other controls. In the following description, it is assumed that p = M/N, where N denotes the number of state variables included in the evaluation function and M denotes the number of divisions of the state variables.

The arithmetic processing circuits 22a1 to 22aM have the same functions as the arithmetic processing units 12b1 to 12bM of the first embodiment. The arithmetic processing circuits 22a1 to 22aM perform, in M parallel, processing for M state variable groups (each including n = N/M state variables), which are obtained by dividing the N state variables of the evaluation function into M.

In the case where the RF selection is performed, each of the arithmetic processing circuits 22a1 to 22aM determines a candidate state variable whose value is to be changed, by performing the calculation of Expression (3) using the amounts of change in energy caused by changing the values of the individual ones of the assigned n state variables. Each of the arithmetic processing circuits 22a1 to 22aM determines one candidate per trial and outputs the index thereof. In addition, each of the arithmetic processing circuits 22a1 to 22aM calculates and outputs a score for the candidate. As the score, $\max(0, \Delta E_j) + T\log(-\log(r_j))$ in Expression (3) may be used.

In the case where the Metropolis selection is performed, each of the arithmetic processing circuits 22a1 to 22aM selects one state variable per trial from the assigned n state variables, under the control of the overall control circuit 21. Then, each of the arithmetic processing circuits 22a1 to 22aM determines, using the amount of change in energy caused by changing the value of the selected state variable, whether to accept the change in the value of the state variable, according to the acceptance probability presented in Expression (4). By doing so, the parallel determination of value change acceptance is performed for M state variables at a time. Each of the arithmetic processing circuits 22a1 to 22aM then outputs the index of the selected state variable and a signal indicating whether to accept the change.

Further, in the case where a state variable whose value is to be changed is selected by the secondary selection circuit 23, the arithmetic processing circuits 22a1 to 22aM update the value of the state variable.

The secondary selection circuit 23 has the same functions as the secondary selection unit 12c of the first embodiment. The secondary selection circuit 23 selects, based on the scores, the index of one candidate from the candidates determined by the arithmetic processing circuits 22a1 to 22aM through the RF selection, as the index of a state variable whose value is to be changed. In the case where $\max(0, \Delta E_j) + T\log(-\log(r_j))$ in Expression (3) is used as the score, the secondary selection circuit 23 selects and outputs the index of the candidate having the smallest score as the index of the state variable whose value is to be changed.

In the case where the arithmetic processing circuits 22a1 to 22aM perform the Metropolis selection, the secondary selection circuit 23 outputs the presence or absence of a state variable that is permitted to change its value, and if any state variable is permitted to change its value, outputs the index of the state variable. If a plurality of state variables are permitted to change their values, the secondary selection circuit 23 randomly selects one state variable and outputs the index thereof, for example.

The above-described process of the secondary selection circuit 23 may be performed by the overall control circuit 21. In this case, the secondary selection circuit 23 may be omitted. Alternatively, the overall control circuit 21 may be referred to as the secondary selection circuit.

The sample acquisition circuit 24 samples state variables whose values are to be updated. The sampling is useful in the case where the occurrence probability or expected value of a specific state, such as in risk assessment, is significant. Sampling may be performed using the RF method and the IIT method, which is a generalization of the RF method.

Let $J_k$ (k = 1, ..., L) denote sampled states, $w_k$ denote weights for the samples, and $f(j_k)$ denote the function of the states. The expected value E(f) of the function of the states is expressed by the following Expression (9).

$$E(f) = \lim_{L \to \infty} \frac{\sum_{k=1}^{L} w_k f(J_k)}{\sum_{k=1}^{L} w_k} \qquad (9)$$

In the case where a solution search by the RF method is performed, $w_k$ may be the sum of the escape probabilities ($\alpha$) in the arithmetic processing circuits 22a1 to 22aM. In the case where a solution search by the serial trials using the Metropolis selection is performed, $w_k$ may be the number of trials until a value change is accepted. Note that, in the case where the reproduction of the probability distribution and the calculation of the expected value of the function of the states are not needed, the calculation of $w_k$ may be omitted.

In the case where the sampling is not performed, the sample acquisition circuit 24 may be omitted.

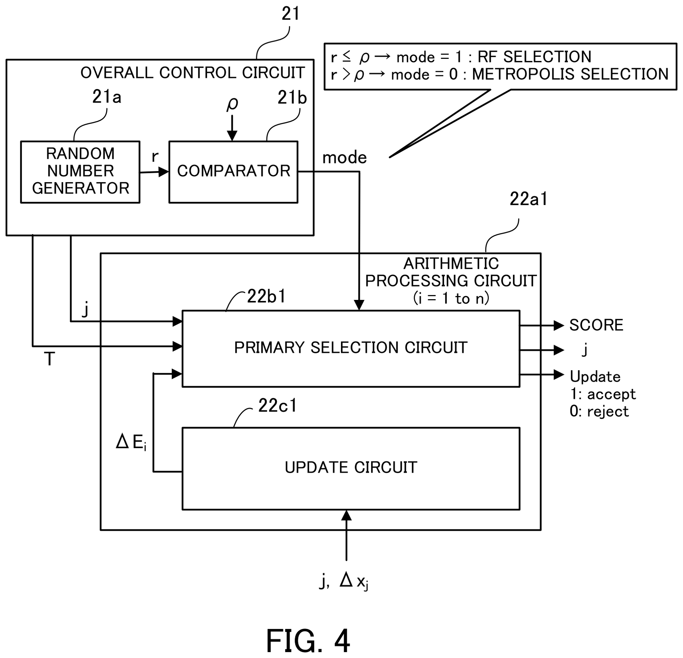

FIG. 4 illustrates an example of an overall control circuit and an arithmetic processing circuit. Although FIG. 4 illustrates an example of the arithmetic processing circuit 22a1 among the arithmetic processing circuits 22a1 to 22aM, the other arithmetic processing circuits 22a2 to 22aM have the same configuration as the arithmetic processing circuit 22a1.

The overall control circuit 21 includes a random number generator 21a and a comparator 21b as elements used to perform the mode switching control. The random number generator 21a generates a uniform random number (r) in the range of 0 < r < 1. As the random number generator 21a, for example, a pseudo-random number sequence generator such as Mersenne Twister may be used.

The comparator 21b compares the probability p (= M/N) with r. The comparator 21b outputs mode = 1 if $r \leq p$, and outputs mode = 0 if r > p. The mode is a variable that specifies whether to cause the arithmetic processing circuits 22a1 to 22aM to perform a solution search by the RF method or to perform a solution search by serial trials. In the following description, the comparator 21b sets the mode to 1 (mode = 1) to cause the arithmetic processing circuits 22a1 to 22aM to perform the RF selection. The comparator 21b sets the mode to 0 (mode = 0) to cause the arithmetic processing circuits 22a1 to 22aM to perform the Metropolis selection.

The overall control circuit 21 may calculate p = M/N using the degree of parallelism M or may acquire p calculated using the degree of parallelism M from the outside.

The arithmetic processing circuit 22a1 includes a primary selection circuit 22b1 and an update circuit 22c1.

In the case of mode = 1, which instructs the RF selection, the primary selection circuit 22b1 performs the calculation of Expression (3) for the state variables i = 1 to n, and outputs the index = j of a candidate state variable whose value is to be changed. $r_i$ used in the calculation of Expression (3) is a uniform random number in the range of $0 < r_i < 1$, which is generated per trial by the primary selection circuit 22b1. $r_i$ may be generated using a pseudo-random sequence generator such as Mersenne Twister. $\Delta E_i$ used in the calculation of Expression (3) is obtained by the update circuit 22c1. In the case of mode = 1, the primary selection circuit 22b1 further outputs $\max(0, \Delta E_j) + T\log(-\log(r_j))$ in Expression (3) as a score.

In the case of mode = 0, which instructs the Metropolis selection, the primary selection circuit 22b1 selects one state variable per trial from the state variables i = 1 to n. For example, the primary selection circuit 22b1 selects the state variable corresponding to an index = j (j is any of 1 to n) supplied from the overall control circuit 21.

Then, the primary selection circuit 22b1 determines, using $\Delta E_i$ resulting from changing the value of the selected state variable, whether to accept the change in the value of the state variable (transition acceptance or rejection) according to the acceptance probability presented in Expression (4). In the case of the Metropolis method, the transition acceptance or rejection according to the acceptance probability presented in Expression (4) may be determined based on whether the following Expression (10) is satisfied.

$$\ln r_j < -\beta \Delta E_j \qquad (10)$$

$\Delta E_j$ is the amount of change in energy caused by changing the value of $x_j$ randomly selected from the state variables $x_i$ (i = 1 to n). $\Delta E_j$ is obtained by the update circuit 22c1.

If Expression (10) is satisfied, the primary selection circuit 22b1 outputs a signal Update = 1 indicating that the change in the value of $x_j$ is accepted. If Expression (10) is not satisfied, the primary selection circuit 22b1 outputs a signal Update = 0 indicating that the change in the value of $x_j$ has been rejected.

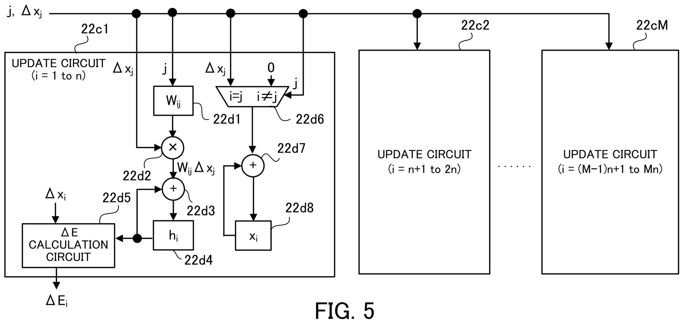

FIG. 5 illustrates an example of the update circuits. FIG. 5 illustrates the update circuit 22c1 included in the arithmetic processing circuit 22a1, as well as update circuits 22c2 to 22cM included in the arithmetic processing circuits 22a2 to 22aM.

The update circuit 22c1 includes a storage circuit 22d1, a multiplier 22d2, an adder 22d3, a storage circuit 22d4, a $\Delta E$ calculation circuit 22d5, a selector 22d6, an adder 22d7, and a storage circuit 22d8.

The storage circuit 22d1 stores weight coefficients ($W_{ij}$) (i = 1 to n, j = 1 to N) included in the evaluation function. Then, the storage circuit 22d1 reads $W_{ij}$ corresponding to the index = j selected by the secondary selection circuit 23.

The multiplier 22d2 outputs the product ($W_{ij}\Delta x_j$) of $W_{ij}$ and the amount of change $\Delta x_j$ of $x_j$.

The adder 22d3 calculates new $h_i$ (updates $h_i$) by adding $W_{ij}\Delta x_j$ to $h_i$ (i = 1 to n) stored in the storage circuit 22d1, $h_i$ being presented in Expression (2).

The storage circuit 22d4 stores n pieces of $h_i$.

The $\Delta E$ calculation circuit 22d5 calculates $\Delta E_i$ presented in Expression (2) using $\Delta x_i$ and $h_i$.

The selector 22d6 outputs $\Delta x_j$ if the index = j matches any of i = 1 to n, and outputs 0 if the index = j does not match any of i = 1 to n.

When the selector 22d6 has outputted $\Delta x_j$, the adder 22d7 calculates new $x_j$ (updates $x_j$) by adding $\Delta x_j$ to $x_j$ among $x_i$ (i = 1 to n) stored in the storage circuit 22d8.

The storage circuit 22d4 stores n pieces of $x_i$.

The index = j and $\Delta x_j$ are also supplied to the update circuits 22c2 to 22cM included in the arithmetic processing circuits 22a2 to 22aM, and the update circuits 22c2 to 22cM performs the same process as the update circuit 22c1 in parallel with the update circuit 22c1. In this connection, the update circuit 22c2 performs the update process of xi and hi and the calculation process of $\Delta E_i$ for i = n+1 to 2n, and the update circuit 22cM performs the update process of $x_i$ and $h_i$ and the calculation process of $\Delta E_i$ for i = (M-1)n+1 to Mn.

The update circuits 22c1 to 22cM all perform the same operation and each do not depend on any outputs of the other update circuits. In addition, the update circuits 22c1 to 22cM perform the same operation, regardless of whether the solution search is performed by the RF selection or by the Metropolis selection.

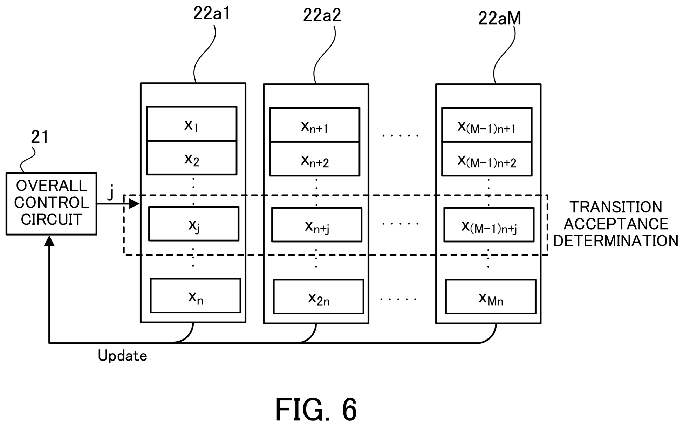

FIG. 6 illustrates an example operation for the Metropolis selection.

In the case where the overall control circuit 21 causes the arithmetic processing circuits 22a1 to 22aM to perform the Metropolis selection, the overall control circuit 21 supplies, for example, indices 1 to n, sequentially in order from 1, to the arithmetic processing circuits 22a1 to 22aM.

Each of the arithmetic processing circuits 22a1 to 22aM selects a state variable corresponding to the supplied index and performs transition acceptance determination. The arithmetic processing circuit 22a1 handles processing of $x_1$ to $x_n$ as n state variables, the arithmetic processing circuit 22a2 handles processing of $x_{n+1}$ to $x_{2n}$ as n state variables, and the arithmetic processing circuit 22aM handles processing of $x_{(M-1)n+1}$ to $x_{Mn}$ as n state variables. For example, when supplied with index = j from the overall control circuit 21, the arithmetic processing circuit 22a1 selects $x_j$, the arithmetic processing circuit 22a2 selects $x_{n+j}$, and the arithmetic processing circuit 22aM selects $x_{(M-1)n+j}$, and the transition acceptance determination is performed in M parallel.

In the case where the overall control circuit 21 executes the functions of the secondary selection circuit 23 or in the case where the sampling is performed, signals Update output from the arithmetic processing circuits 22a1 to 22aM are supplied to the overall control circuit 21 as illustrated in FIG. 6.

Next, an example of the operation timing of the data processing apparatus 20 in a solution search will be described.

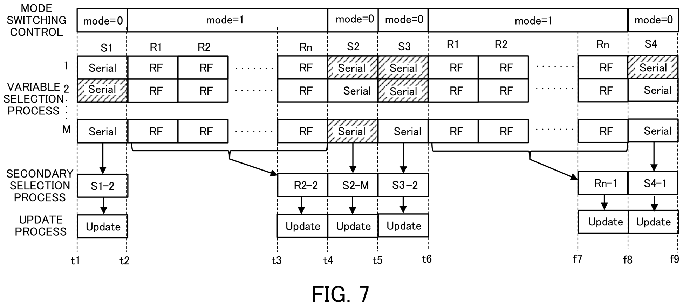

FIG. 7 is a timing chart illustrating an example of the operation timing of the data processing apparatus in a solution search. FIG. 7 illustrates mode switching control by the overall control circuit 21 and the timing of a variable selection process by the M arithmetic processing circuits 22a1 to 22aM. The variable selection process refers to a process of selecting a candidate state variable whose value is to be changed by the RF selection or a process of selecting a state variable by serial trials using the Metropolis selection and determining whether to accept the transition. Further, FIG. 7 illustrates the timing of the secondary selection process by the secondary selection circuit 23 and the timing of the update process by the arithmetic processing circuits 22a1 to 22aM. The cycles of the first to fourth serial trials are denoted as S1 to S4, respectively. Further, in the RF selection performed by each of the arithmetic processing circuits 22a1 to 22aM, the cycles for calculating $\Delta E_i$ corresponding to changes in the values of n state variables are denoted as R1 to Rn.

In the period from timing t1 to t2, mode = 0. Therefore, each of the arithmetic processing circuits 22a1 to 22aM selects one state variable and determines transition acceptance. In the example of FIG. 7, a transition is accepted for the state variable selected by the arithmetic processing circuit 22a2. In this case, the secondary selection circuit 23 selects and outputs the index of the state variable. "S1-2" indicates that the secondary selection circuit 23 outputs the index of the state variable selected in the cycle S1 of the first serial trial by the second arithmetic processing circuit 22a2. The arithmetic processing circuits 22a1 to 22aM perform the update process (update of $x_i$ and $h_i$) corresponding to the change in the value of the selected state variable.

In the period from timing t2 to t4, mode = 1. Therefore, each of the arithmetic processing circuits 22a1 to 22aM sequentially selects n (= N/M) state variables and calculates $\Delta E_i$. In addition, in the period from timing t3 to t4, each of the arithmetic processing circuits 22a1 to 22aM outputs the index of a candidate state variable whose value is to be changed and the score of the candidate, according to Expression (3). The secondary selection circuit 23 selects and outputs one index from the M candidates based on the scores. "R2-2" indicates that the secondary selection circuit 23 outputs the index of the state variable selected in the cycle R2 by the second arithmetic processing circuit 22a2. The arithmetic processing circuits 22a1 to 22aM perform the update process (update of $x_i$ and $h_i$) corresponding to the change in the value of the selected state variable.

In the period from timing t4 to t5 and the period from timing t5 to t6, mode = 0. In these periods, the same process as that in the period from timing t1 to t2 is performed. However, in the period from timing t4 to t5, transitions are accepted for the state variables selected by the arithmetic processing circuits 22a1 and 22aM. In the period from timing t5 to t6, transitions are accepted for the state variables selected by the arithmetic processing circuits 22a1 and 22a2. In such a case, the secondary selection circuit 23 selects and outputs the index of one state variable, for example, randomly. In the example of FIG. 7, "S2-M," that is the index of the state variable selected in the cycle S2 of the second serial trial by the M-th arithmetic processing circuit 22aM is output. In addition, "S3-2," that is, the index of the state variable selected in the cycle S3 of the third serial trial by the second arithmetic processing circuit 22a2 is output.

In the period from timing t6 to t8, mode = 1. In this period, the same process as that in the period from timing t2 to t4 is performed. However, in the period from timing t7 to timing t8, "Rn-1," that is, the secondary selection circuit 23 outputs the index of the state variable selected in the cycle Rn by the first arithmetic processing circuit 22a1.

In the period from timing t8 to t9, mode = 0. In this period, the same process as that in the period from timing t1 to t2 is performed. However, in the period from timing t8 to t9, a transition is accepted for the state variable selected by the arithmetic processing circuit 22a1. Therefore, "S4-1," that is, the secondary selection circuit 23 outputs the index of the state variable selected in the cycle S4 of the fourth serial trial by the first arithmetic processing circuit 22a1.

Next, a procedure (data processing method) for the process performed by the data processing apparatus according to the second embodiment will be described.

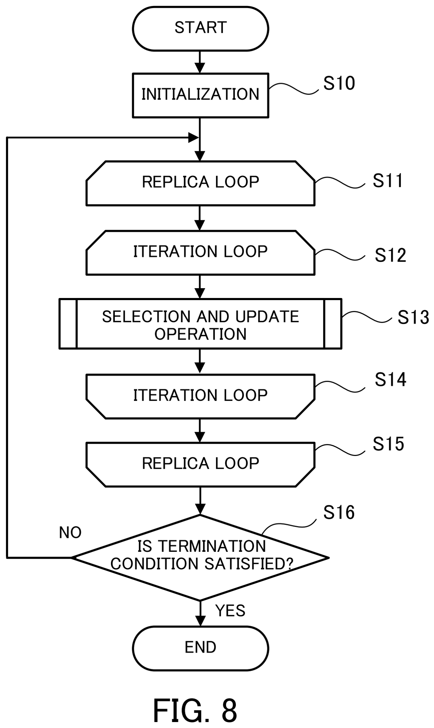

FIG. 8 is a flowchart illustrating an example procedure for the process performed by the data processing apparatus according to the second embodiment. The process illustrated in FIG. 8 describes an example in which a solution search is performed using the same evaluation function information by a plurality of replicas.

First, initialization is performed (step S10). In step S10, the setting of evaluation function information such as $W_{ij}$, the setting of initial values of N state variables ($x_i$), the setting of initial values of N local fields ($h_i$), and others are performed.

Step S11 to step S15 is a loop process (referred to as a replica loop in FIG. 8) that is repeated the same number of times as replicas. Step S12 to step S14 is a loop process (referred to as an iteration loop in FIG. 8) that is repeated a predetermined number of iterations.

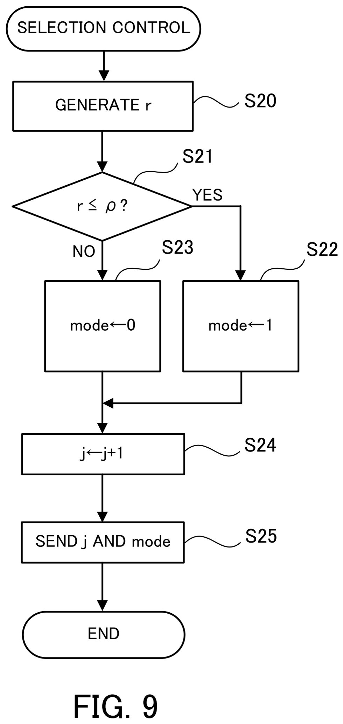

In step S13, a selection and update operation of selecting a state variable whose value is to be changed and updating a state variable is performed. An example of the operation in step S13 will be described later (see FIGS. 9 to 11).

When step S13 has been repeated the predetermined number of iterations, the process for the next replica is performed.

After the process for all replicas is completed, it is determined whether a predetermined termination condition is satisfied (step S16). If it is determined that the predetermined termination condition is satisfied, the process of the data processing apparatus 20 is completed. If it is determined that the termination condition is not satisfied, the process from step S11 is repeated.

FIG. 9 is a flowchart illustrating an example procedure for selection control to select a state variable whose value is to be changed. The example procedure for selection control illustrated in FIG. 9 refers to a part of the process performed by the overall control circuit 21 in step S13 of FIG. 8.

The overall control circuit 21 generates a uniform random number (r) in the range of $0 < r < 1$ (step S20). Then, the overall control circuit 21 determines whether $r \leq p$ is satisfied (step S21). Here, p is M/N. If it is determined that $r \leq p$ is satisfied, the overall control circuit 21 sets the mode to 1 (step S22). If it is determined that $r \leq p$ is not satisfied, the overall control circuit 21 sets the mode to 0 (step S23).

After step S22 or S23, the overall control circuit 21 sets index = j to j + 1 (step S24), sends j and the mode to the arithmetic processing circuits 22a1 to 22aM (step S25), and then completes the selection control.

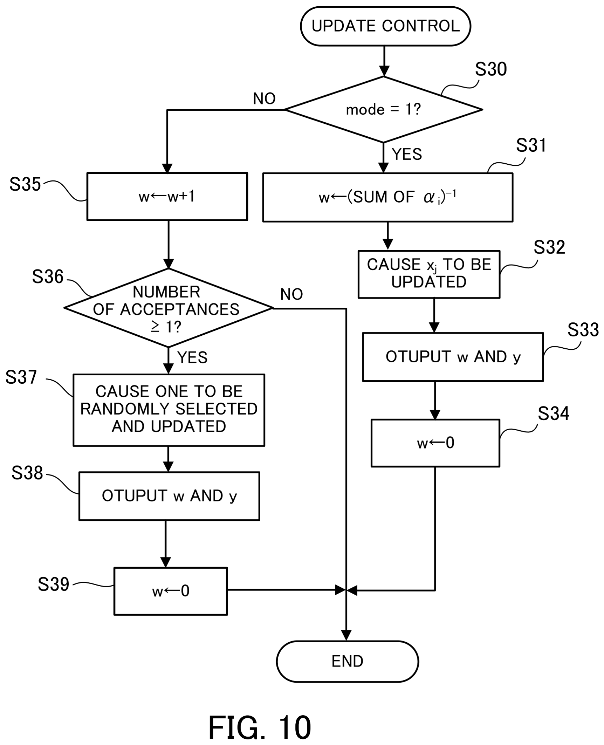

FIG. 10 is a flowchart illustrating an example procedure for update control. The example procedure for update control illustrated in FIG. 10 refers to a part of the process performed by the overall control circuit 21 in step S13 of FIG. 8.

The overall control circuit 21 determines whether mode = 1 (step S30).

If the overall control circuit 21 determines that mode = 1, the overall control circuit 21 calculates the reciprocal of the sum of the escape probabilities $\alpha_i$, and sets the reciprocal as a weight (w) for sample to be used in sampling (step S31). The overall control circuit 21 causes one of the arithmetic processing circuits 22a1 to 22aM to update $x_j$ corresponding to the index selected by the secondary selection circuit 23 based on scores (step S32). Then, the overall control circuit 21 outputs w, acquires the values of the N state variables from the arithmetic processing circuits 22a1 to 22aM, and outputs the values as the updated state (y) (step S33). The outputted w and y are received by the sample acquisition circuit 24. After step S33, the overall control circuit 21 sets w to 0 (step S34), and completes the update control.

If it is determined that mode = 1 is not satisfied, the overall control circuit 21 sets w to w + 1 (step S35). After step S35, the overall control circuit 21 determines whether the number of acceptances (the number of transitions determined to be accepted in the transition acceptance determination performed in M parallel) is greater than or equal to one (step S36). The number of acceptances is detected based on the number of signals Update having a value 1 among the signals Update output by the arithmetic processing circuits 22a1 to 22aM.

If the overall control circuit 21 determines that the number of acceptances is greater than or equal to one, the overall control circuit 21 causes the secondary selection circuit 23 to randomly select the index of one state variable, and causes one of the arithmetic processing circuits 22a1 to 22aM to update the value of the state variable (step S37). Then, the overall control circuit 21 outputs w, and also acquires the values of the N state variables from the arithmetic processing circuits 22a1 to 22aM and outputs the values as the updated state (y) (step S38). The outputted w and y are received by the sample acquisition circuit 24. After step S38, the overall control circuit 21 sets w to 0 (step S39), and completes the update control.

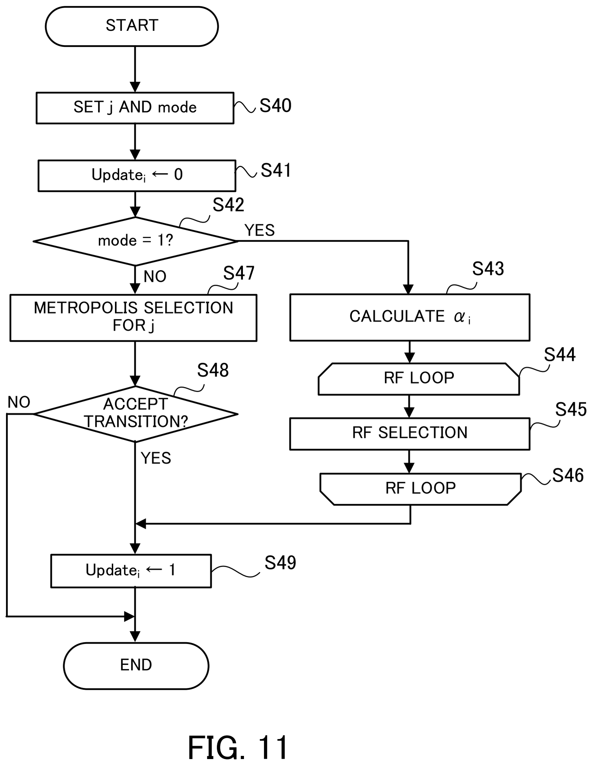

FIG. 11 is a flowchart illustrating an example procedure for the process performed by an arithmetic processing circuit. The example procedure illustrated in FIG. 11 relates to the process performed by the i-th arithmetic processing circuit 22ai among the arithmetic processing circuits 22a1 to 22aM.

The arithmetic processing circuit 22ai sets the index = j and the mode sent from the overall control circuit 21 (step S40). Then, the arithmetic processing circuit 22ai sets $Update_i$ to 0 (step S41). Next, the arithmetic processing circuit 22ai determines whether mode = 1 (step S42). If it is determined that mode = 1, the arithmetic processing circuit 22ai executes step S43. If it is determined that mode = 1 is not satisfied, the arithmetic processing circuit 22ai executes step S47.

In step S43, the arithmetic processing circuit 22ai calculates the escape probability $\alpha_i$ according to Expression (5). In this connection, in the case where the sampling is not performed, this step is not needed.

After step S43, a loop process (denoted as RF loop in FIG. 11) for performing the RF selection is performed (steps S44 to S46). In step S45, the RF selection is performed. In the RF selection, $\Delta E_i$ of Expression (3) is calculated. In order to calculate $\Delta E_i$ for n state variables, the RF selection is repeated n times in the loop process. In addition, in the n-th execution of the RF selection in step S45, the index = j of a candidate state variable whose value is to be changed is calculated according to Expression (3).

In step S47, the Metropolis selection is performed for j. In the Metropolis selection, $\Delta E_j$ is calculated for the index = j set in step S40. For example, in the case where the arithmetic processing circuit 22ai is the arithmetic processing circuit 22a2 illustrated in FIG. 6, $\Delta E_{n+j}$, which is the amount of change in energy resulting from a change in the value of $x_{n+j}$, is calculated as $\Delta E_j$.

Then, the arithmetic processing circuit 22ai determines whether to accept a change in the value of the state variable identified by index = j (whether to accept the transition) (step S48). Whether to accept a transition is determined based on whether the relationship presented in Expression (10) is satisfied.

If it is determined in step S48 that the transition is acceptable, or after the loop process of steps S44 to S46 is completed, the arithmetic processing circuit 22ai sets Update$_i$ to 1 (step S49).

After step S49 or if it is determined in step S48 that the transition is not acceptable, the arithmetic processing circuit 22ai completes the process for one trial.

The procedures illustrated in FIGS. 8 to 11 are merely examples, and the order of the processes may be changed as appropriate.

As described above, in the data processing apparatus 20 of the second embodiment, the arithmetic processing circuits 22a1 to 22aM perform the RF selection and the Metropolis selection based on the evaluation function information for the respective divided groups obtained by dividing the N state variables of the evaluation function into M. Each of the arithmetic processing circuits 22a1 to 22aM performs the RF selection with a probability of M/N and performs the Metropolis selection with a probability of 1 - (M/N), under the control of the overall control circuit 21. As a result, for the same reasons as described in the first embodiment, it is possible to achieve a speedup proportional to the degree of parallelism (M), and thus to search for solutions to combinatorial optimization problems at high speed.

In addition, the same effects as those of the data processing apparatus 10 of the first embodiment are obtained.

[Third Embodiment]

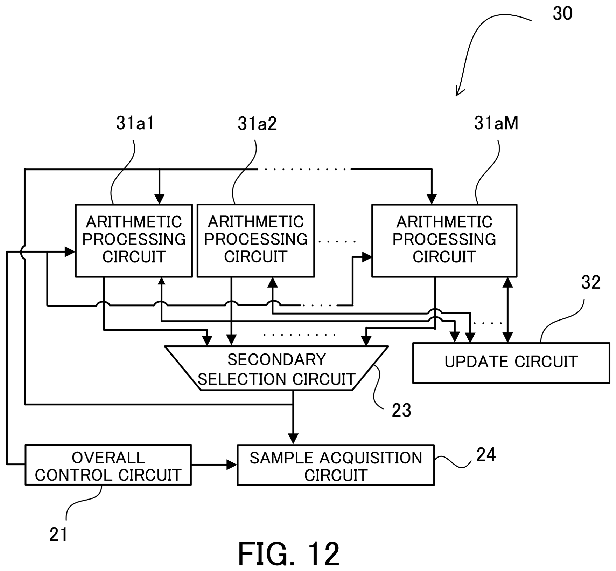

FIG. 12 illustrates an example of a data processing apparatus according to a third embodiment. In FIG. 12, the same elements as those of the data processing apparatus 20 illustrated in FIG. 3 are denoted by the same reference numerals.

In the data processing apparatus 20 of the second embodiment described above, the arithmetic processing circuits 22a1 to 22aM include the update circuits 22c1 to 22cM as illustrated in FIG. 5. That is, the degree of parallelism M is the same as the degree of parallelism of the update process. On the other hand, in the data processing apparatus 30 of the third embodiment, the update process is performed with a degree of parallelism different from the degree of parallelism M.

The arithmetic processing circuits 31a1, 31a2, ..., and 31aM do not include update circuits. An update circuit 32 is provided separately from the arithmetic processing circuits 31a1 to 31aM. Each of the arithmetic processing circuits 31a1 to 31aM includes the primary selection circuit 22b1 as illustrated in FIG. 4.

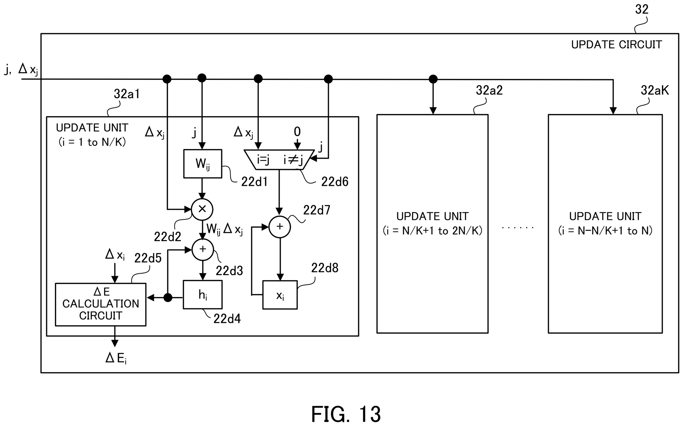

FIG. 13 illustrates an example of update circuits of the data processing apparatus according to the third embodiment.

The update circuit 32 includes K update units 32a1, 32a2, ..., and 32aK. Each of the update units 32a1 to 32aK has the same configuration as the update circuit 22c1 illustrated in FIG. 5. However, the update unit 32a1 performs the update process of $x_i$ and $h_i$ and the calculation process of $\Delta E_i$ for i = 1 to N/K, and the update unit 32a2 performs the update process of $x_i$ and $h_i$ and the calculation process of $\Delta E_i$ for i = N/K+1 to 2N/K. The update unit 32aK performs the update process of $x_i$ and $h_i$ and the calculation process of $\Delta E_i$ for i = N-N/K+1 to N.

K is different from M. The number of update units 32a1 to 32aK to be used may be changed under the control of the overall control circuit 21.

In the case where the calculation overhead for updating the state variables is large, the above configuration, in which a circuit that performs the update with a degree of parallelism different from M is implemented, enables a reduction in the overall time overhead. In the update process, the processing time may vary depending on the density of $W_{ij}$. For example, in the case of $W_{ij} = 0$, the update process may be skipped. Therefore, the following control may be performed: in the case where the coefficient density is small (in the case where the number of $W_{ij}$ equal to 0 is large), the degree of parallelism of the update process is decreased (K is decreased), and in the case where the coefficient density is large, the degree of parallelism is increased (K is increased). This control may improve the computational efficiency and the processing performance in the overall processing.

[Fourth Embodiment]

In the second embodiment, the probability p of performing a solution search using the RF method is fixed at N/M, but may be changed.

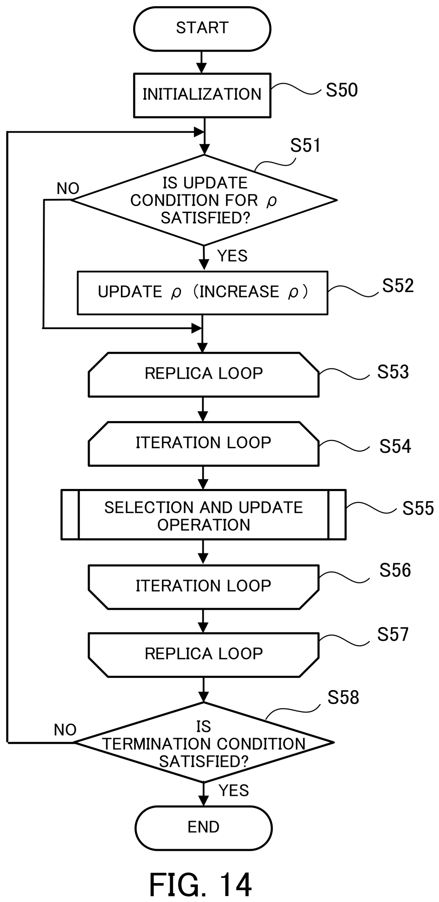

FIG. 14 is a flowchart illustrating an example procedure for the process performed by a data processing apparatus according to a fourth embodiment. As in the process illustrated in FIG. 8, FIG. 14 illustrates an example in which a solution search is performed using the same evaluation function information by a plurality of replicas.

First, initialization is performed (step S50). In step S50, the setting of evaluation function information such as $W_{ij}$, the setting of initial values of N state variables ($x_i$), the setting of initial values of N local fields ($h_i$), and others are performed. For example, an initial value of the probability p is set to N/M.

Thereafter, the overall control circuit 21 determines whether a predetermined update condition for p is satisfied, indicating that the initial relaxation is complete (step S51). For example, the overall control circuit 21 determines that the update condition is satisfied when the number of iterations has reached a predetermined number. Alternatively, the overall control circuit 21 may determine that the update condition is satisfied when a minimum energy has not been updated for a predetermined period of time or longer, or when the update frequency of a minimum energy has become lower than or is equal to a predetermined frequency.

If it is determined that the update condition for p is satisfied, the overall control circuit 21 updates p by increasing its value (step S52). The method of updating p may be selected as appropriate, for example, by increasing p by 10% with respect to the original value or by increasing p by a ratio larger than the previous increase ratio.

After step S52 or if it is determined in step S51 that the update condition for p is not satisfied, steps S53 to S58 are executed. Steps S53 to S58 are the same as steps S11 to S16 illustrated in FIG. 8.

If it is determined in step S58 that a predetermined termination condition is satisfied, the process of the data processing apparatus of the fourth embodiment is completed. If it is determined that the termination condition is not satisfied, the process from step S51 is repeated.

With the process as described above, in the initial relaxation phase in which the escape probability ($\alpha$) tends to be high and the Metropolis selection is advantageous, the probability (1 - p) of performing the Metropolis selection becomes high. Then, after the initial relaxation phase, when the escape probability ($\alpha$) becomes low and the Metropolis selection becomes disadvantageous, the probability p of performing the RF selection becomes high. Thus, the solution search is efficiently performed.

[Fifth Embodiment]

In the update control of the overall control circuit 21 in the second embodiment, as illustrated in FIG. 10, in the case where the number of acceptances in the Metropolis selection performed by the arithmetic processing circuits 31a1 to 31aM is greater than or equal to one, the secondary selection circuit 23 is caused to randomly select the index of one state variable. Then, the overall control circuit 21 causes one of the arithmetic processing circuits 22a1 to 22aM to update the value of the state variable.

In the update control of the overall control circuit 21 in a fifth embodiment described below, in the case where the number of acceptances is greater than or equal to one in the initial relaxation phase, the value of each accepted state variable is updated.

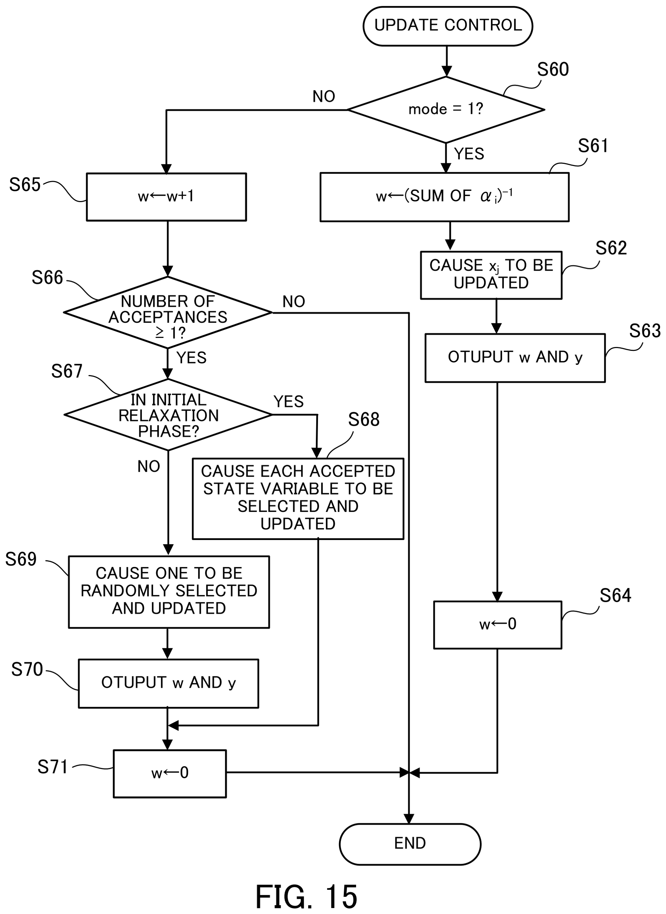

FIG. 15 is a flowchart illustrating an example procedure for update control according to the fifth embodiment.

Steps S60 to S66 are the same as steps S30 to S36 of the update control illustrated in FIG. 10.

If it is determined in step S66 that the number of acceptances is greater than or equal to one, the overall control circuit 21 then determines whether the current status of the solution search is in the initial relaxation phase (step S67). For example, the overall control circuit 21 determines that the current status is not in the initial relaxation phase, when a minimum energy has not been updated during a predetermined number of iterations, or when the number of iterations from the initial state has reached a predetermined number.

If it is determined that the current status is in the initial relaxation phase, the overall control circuit 21 causes the secondary selection circuit 23 to select the indices of the accepted state variables, and causes the arithmetic processing circuits 22a1 to 22aM to sequentially update the values of the state variables (step S68). Until the update process of the values of the state variables is completed, the overall control circuit 21 causes the arithmetic processing circuits 22a1 to 22aM to suspend the Metropolis selection and the RF selection. After the update process of the values of the state variables is completed, the Metropolis selection or the RF selection is performed according to the probability p. Since no sampling output is performed during the initial relaxation phase, step S71 is executed after step S68.

If it is determined in step S67 that the current status is not in the initial relaxation phase, the overall control circuit 21 causes the secondary selection circuit 23 to randomly select the index of one state variable and causes one of the arithmetic processing circuits 22a1 to 22aM to update the value of the state variable (step S69).

After step S69, step S70 is executed. Steps S70 and S71 are the same as steps S38 and S39 illustrated in FIG. 10.

The above-described process makes it possible to further accelerate a solution search during the initial relaxation phase in which the acceptance probability is high.

[Sixth Embodiment]

In a data processing apparatus according to a sixth embodiment described below, a plurality of state variable groups to be processed in parallel are groups of state variables that have a one-hot constraint among the plurality of state variables included in an evaluation function.

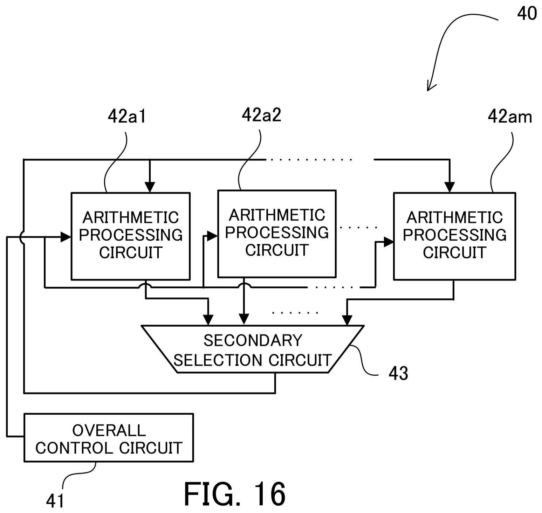

FIG. 16 illustrates an example of a data processing apparatus according to the sixth embodiment.

The data processing apparatus 40 includes an overall control circuit 41, arithmetic processing circuits 42a1, 42a2, ..., and 42am, and a secondary selection circuit 43. These circuits may be implemented by an electronic circuit such as an ASIC or an FPGA. These circuits may also be implemented using one or more processors or processor cores.

It is noted that, in FIG. 16, a storage unit that stores evaluation function information on an evaluation function of a combinatorial optimization problem and others is not illustrated.

The overall control circuit 41 controls solution search performed in the arithmetic processing circuits 42a1 to 42am. For example, the overall control circuit 41 controls the temperature parameter (T) used in the arithmetic processing circuits 42a1 to 42am, controls mode switching according to a probability p, performs other controls. In the sixth embodiment, the overall control circuit 41 outputs mode = 1 with a probability of p = 1/m to cause the arithmetic processing circuits 42a1 to 42am to perform the RF selection, and outputs mode = 0 with a probability of 1 - p to cause the arithmetic processing circuits 42a1 to 42am to perform the Metropolis selection.

The arithmetic processing circuits 42a1 to 42am perform processing in parallel for the plurality of state variable groups each having a one-hot constraint.

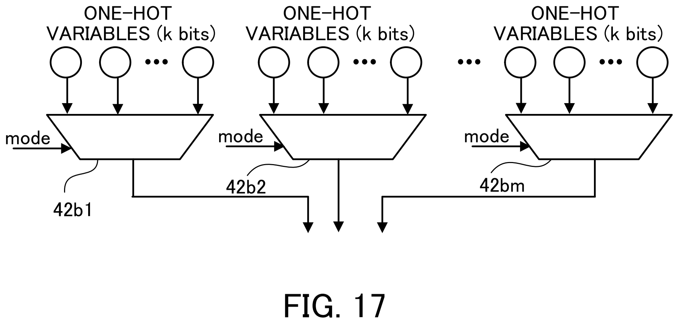

FIG. 17 illustrates an example of primary selection circuits included in arithmetic processing circuits according to the sixth embodiment. In the example of FIG. 17, each state variable group including k state variables is illustrated as having the one-hot constraint. State variables that have the one-hot constraint are hereinafter referred to as one-hot variables.

In the case of mode = 1, m primary selection circuits 42b1, 42b2, ..., and 42bm each perform the RF selection. In this case, each of the primary selection circuits 42b1 to 42bm determines a candidate one-hot variable whose value is to be changed to 1, by performing the calculation of Expression (3) using $\Delta E_i$ obtained by changing the value of each of the one-hot variables whose value is 0 among the k one-hot variables (k bits). In the sixth embodiment, $\Delta E_i$ is the amount of change in energy caused by changing one of the one-hot variables having the value 0 to 1 or by changing a one-hot variable having the value 1 to 0.

In the case of mode = 0, the m primary selection circuits 42b1 to 42bm each perform the Metropolis selection. In this case, each of the primary selection circuits 42b1 to 42bm randomly selects, per trial, one of the one-hot variables having the value 0 from the k one-hot variables (k bits). Then, each of the primary selection circuits 42b1 to 42bm determines, using the above $\Delta E_i$ obtained by changing the value of the selected one-hot variable, whether to accept the change in the value of the one-hot variable, according to the acceptance probability presented in Expression (4).

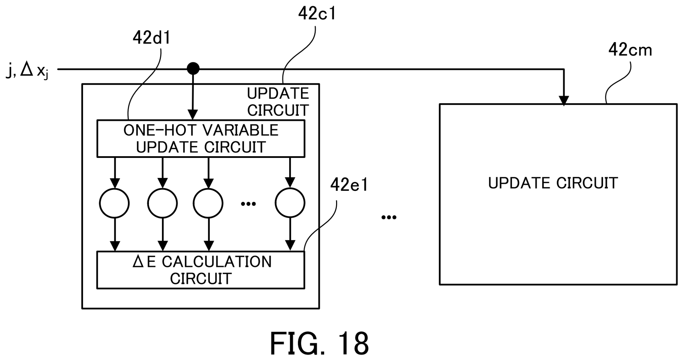

FIG. 18 illustrates an example of update circuits included in the arithmetic processing circuits according to the sixth embodiment.

After a one-hot variable is selected, the m update circuits 42c1 to 42cm update the value of the selected one-hot variable. For example, the update circuit 42c1 includes a one-hot variable update circuit 42d1 and a $\Delta E$ calculation circuit 42e1.

When the one-hot variable update circuit 42d1 determines that the one-hot variable identified by the index = j matches any of the assigned k one-hot variables, the one-hot variable update circuit 42d1 updates the value of that one-hot variable to 1. In addition, the one-hot variable update circuit 42d1 updates the value of the one-hot variable that has been 1 to 0.

The $\Delta E$ calculation circuit 42e1 calculates $\Delta E_i$ according to the changes in the values of the 2-bit one-hot variables.

The secondary selection circuit 43 in FIG. 16 has the same functions as the secondary selection circuit 23 of the second embodiment. The secondary selection circuit 43 selects, based on scores, one index from the candidates determined through the RF selection by the arithmetic processing circuits 42a1 to 42am, as the index of a one-hot variable whose value is to be changed. In the case where max $(0, \Delta E_j) + T\log(-\log(r_j))$ in Expression (3) is used as the score, the secondary selection circuit 43 selects and outputs the index of the candidate having the smallest score as the index of the one-hot variable whose value is to be changed.

In the case where the secondary selection circuit 43 and the arithmetic processing circuits 42a1 to 42am perform the Metropolis selection, the secondary selection circuit 43 outputs the presence or absence of a one-hot variable that is permitted to change its value, and if any one-hot variable is permitted to change its value, outputs the index of the one-hot variable. If a plurality of one-hot variables are permitted to change their values, the secondary selection circuit 43 randomly selects the index of one one-hot variable and outputs the index thereof, for example.

With the data processing apparatus 40 of the sixth embodiment as described above, even for a problem having state variable groups that have the one-hot constraint, it is possible to achieve a speedup proportional to the degree of parallelism m, and thus to achieve a solution search at high speed.

[Seventh Embodiment]

In the above embodiments, the state variables are binary variables each taking the value 0 or 1. Alternatively, integer variables may be used as the state variables.

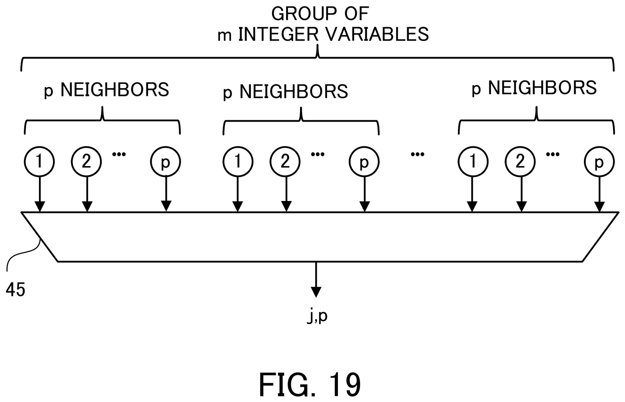

FIG. 19 is a schematic diagram illustrating an example in which integer variables are used.

In the case where m integer variables $x_i$ are used, a partial neighborhood may be defined as a set of variables whose difference from $x_i$ is $\Delta x_i$ (i = 1 to m). The number of neighbors p per integer variable $x_i$ is greater than that in the case of the binary variables, e.g., $\Delta x_i \in \{-4, -3, -2, -1, 1, 2, 3, 4\}$.

In the case where m integer variables $x_i$ exist and the number of neighbors per variable is p, the primary selection circuit 45 selects one from mp neighbors. Here, j is an index identifying one of the m integer variables $x_i$, and p is an index identifying one of the p neighbors.

Expression (2) for calculating $\Delta E_i$ from $\Delta x_i$, and $\Delta h_i^{(j)} = W_{ij}\Delta x_j$ used for updating $h_i$ are also applicable to the case where the state variables are integer variables.

[Another example of hardware configuration of data processing apparatus]

The data processing apparatuses of the first to seventh embodiments may be implemented with hardware as described below.

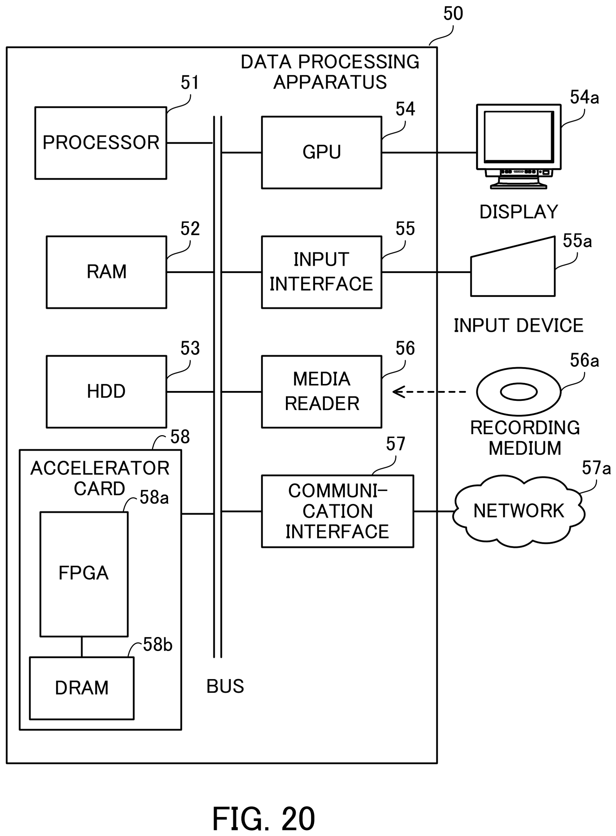

FIG. 20 illustrates an example of the hardware of a data processing apparatus.

The data processing apparatus 50 is, for example, a computer, and includes a processor 51, a RAM 52, an HDD 53, a GPU 54, an input interface 55, a media reader 56, a communication interface 57, and an accelerator card 58. These units are connected to a bus.

The processor 51 is a processor such as a GPU or a CPU, including an arithmetic circuit that executes program instructions and a storage circuit such as a cache memory. The processor 51 loads at least a part of a program and data from the HDD 53 into the RAM 52 and executes the program. The processor 51 may include a plurality of processor cores. The data processing apparatus 50 may include a plurality of processors. Among a plurality of processes performed by the data processing apparatus 50, a certain process and another process may be performed by different processors. A set of a plurality of processors (multiprocessor) may be referred to as a "processor". The processor may be referred to as processor circuitry.

The RAM 52 is a volatile semiconductor memory that temporarily stores programs to be executed by the processor 51 and data to be used by the processor 51 for computation. The data processing apparatus 50 may include a type of memory other than the RAM 52, or may include a plurality of memories.

The HDD 53 is a non-volatile storage device that stores software programs such as an operating system (OS), middleware, and application software, and data. The programs include, for example, a program that causes the data processing apparatus 50 to perform a process of searching for a solution to a combinatorial optimization problem. The data processing apparatus 50 may include another type of storage device such as a flash memory or a solid state drive (SSD), or may include a plurality of non-volatile storage devices.

The GPU 54 outputs images (for example, an image related to a computation result of a combinatorial optimization problem) to a display 54a connected to the data processing apparatus 50 in accordance with instructions from the processor 51. As the display 54a, a cathode ray tube (CRT) display, a liquid crystal display (LCD), a plasma display panel (PDP), an organic electro-luminescence (OEL) display, or the like may be used.

The input interface 55 receives input signals from an input device 55a connected to the data processing apparatus 50 and outputs the input signals to the processor 51. As the input device 55a, a pointing device such as a mouse, a touch panel, a touch pad, or a track ball, a keyboard, a remote controller, a button switch, or the like may be used. A plurality of types of input devices may be connected to the data processing apparatus 50.

The media reader 56 is a reading device that reads programs and data recorded on a recording medium 56a. As the recording medium 56a, for example, a magnetic disk, an optical disc, a magneto-optical disk (MO), a semiconductor memory, or another may be used. Magnetic disks include a flexible disk (FD) and an HDD. Optical discs include a compact disc (CD) and a digital versatile disc (DVD).

For example, the media reader 56 copies a program and data read from the recording medium 56a to another recording medium such as the RAM 52 or the HDD 53. The read program is executed by, for example, the processor 51. The recording medium 56a may be a portable recording medium, and may be used to distribute programs and data. The recording medium 56a and the HDD 53 may be referred to as computer-readable storage media.

The communication interface 57 is an interface that is connected to a network 57a and communicates with other information processing apparatuses via the network 57a. The communication interface 57 may be a wired communication interface connected to a communication device such as a switch by a cable, or may be a wireless communication interface connected to a base station by a wireless link.

The accelerator card 58 is a hardware accelerator that searches for solutions to combinatorial optimization problems. The accelerator card 58 includes an FPGA 58a and a dynamic random access memory (DRAM) 58b.

The FPGA 58a implements, for example, the functions of the processing unit 12 illustrated in FIG. 1.

The DRAM 58b implements, for example, the functions of the storage unit 11 illustrated in FIG. 1.

The processor 51 may implement the functions of the control processing unit 12a of the processing unit 12 illustrated in FIG. 1. The accelerator card 58 may be provided in plurality, for example, to run a plurality of replicas.

The processor 51 may implement all the functions of the processing unit 12 illustrated in FIG. 1. In this case, the accelerator card 58 may be omitted. For example, a plurality of arithmetic circuits included in the processor may execute the functions of the arithmetic processing units 12b1 to 12bM illustrated in FIG. 1.

The processing method executed by the data processing apparatus in each of the embodiments described above may also be implemented as software by causing the computer as illustrated in FIG. 20 to execute a program.

The program may be recorded in a computer-readable storage medium. As the storage medium, for example, a magnetic disk, an optical disc, a magneto-optical disk, a semiconductor memory, or another may be used. Magnetic disks include a flexible disk (FD) and an HDD. Optical discs include a compact disc (CD), a CD-recordable (CD-R), a CD-rewritable (CD-RW), a digital versatile disc (DVD), and a DVD-R/RW. The program may be recorded on portable recording media and distributed. In this case, the program may be copied from a portable recording medium to another recording medium and executed.

One aspect of the data processing apparatus, the computer program, and the data processing method of the present disclosure has been described above based on the embodiments. However, these are merely examples, and the present subject matter is not limited to the above description.

In one aspect, it is possible to search for solutions to combinatorial optimization problems at high speed.

In any of the above aspects, the various features may be implemented in hardware, or as software modules running on one or more processors/computers.

The present disclosure also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program may be stored on a non-transitory computer-readable medium, or it could, for example, be in the form of a signal such as a downloadable data signal provided from an Internet website, or it could be in any other form.

**Claims**

1.    A data processing apparatus comprising:

storage means (11) for storing evaluation function information (11a) on an evaluation function including a plurality of state variable groups for a combinatorial optimization problem; and

processing means (12) for, in executing a plurality of trials each of which is to change a value of one state variable included in the plurality of state variable groups:

performing, based on the evaluation function information, a first process of determining a candidate for a first state variable whose value is to be changed in parallel for each of the plurality of state variable groups, in each trial, the first process being performed with a first probability calculated using a first degree of parallelism corresponding to a number of the plurality of state variable groups;

performing, based on the evaluation function information, a second process of selecting one second state variable and determining whether to accept a change in a value of the one second state variable in parallel for each of the plurality of state variable groups, in each trial, the second process being performed with a second probability obtained by subtracting the first probability from 1;

updating the value of the first state variable selected from candidates determined by the first process; and

updating the value of a second state variable whose change is accepted by the second process.

2.    The data processing apparatus according to claim 1, wherein, in the first process, the processing means determines the candidate by a rejection-free method using amounts of change in a value of the evaluation function caused by changing values of individual state variables included in each of the plurality of state variable groups.

3.    The data processing apparatus according to claim 1 or 2, wherein, in the second process, the processing means determines whether to accept the change in the value of the one second state variable, according to an acceptance probability of the change in the value of the one second state variable based on a Metropolis method or a Gibbs method.

4. The data processing apparatus according to any of the preceding claims, wherein the plurality of state variable groups are obtained by dividing N state variables included in the evaluation function into M groups, and the first probability is a value obtained by dividing M, which is the first degree of parallelism, by N.

5. The data processing apparatus according to any of the preceding claims, wherein the processing means selects the first state variable, based on an evaluation value of each of the candidates determined by the first process.

6. The data processing apparatus according to any of the preceding claims, wherein the processing means includes:

arithmetic circuits (22a1 to 22aM) provided in a number equal to the first degree of parallelism, each of the arithmetic circuits being configured to perform the first process with the first probability and perform the second process with the second probability; and
a selection circuit (23) configured to

select the first state variable based on an evaluation value of each of the candidates determined by the first process, and
select, in response to determining that changes in values of a plurality of second state variables are accepted, one second state variable from the plurality of second state variables.

7. The data processing apparatus according to any of the preceding claims, wherein an update process of updating the value of the first state variable or the value of the second state variable is performed with a second degree of parallelism different from the first degree of parallelism.

8. The data processing apparatus according to any of the preceding claims, wherein the processing means increases the first probability in response to a predetermined update condition being satisfied, the predetermined update condition indicating that initial relaxation is complete.

9. The data processing apparatus according to any of the preceding claims, wherein, in an initial relaxation phase, the processing means updates, in response to determining that changes in values of a plurality of second state variables are accepted, the values of the plurality of second state variables whose changes are accepted, and then performs the first process or the second process.

10. The data processing apparatus according to any of the preceding claims, wherein each of the plurality of state variable groups is a group of state variables that have a one-hot constraint among a plurality of state variables included in the evaluation function, and the first probability is a reciprocal of the first degree of parallelism.

11. A computer program that causes a computer to perform a process comprising,
in executing a plurality of trials each of which is to change a value of one state variable included in a plurality of state variable groups included in an evaluation function for a combinatorial optimization problem:

performing, based on evaluation function information (11a) on the evaluation function, a first process of determining a candidate for a first state variable whose value is to be changed in parallel for each of the plurality of state variable groups, in each trial, the evaluation function information being stored in storage means (11), the first process being performed with a first probability calculated using a first degree of parallelism corresponding to a number of the plurality of state variable groups;
performing, based on the evaluation function information, a second process of selecting one second state variable and determining whether to accept a change in a value of the one second state variable in parallel for each of the plurality of state variable groups, in each trial, the second process being performed with a second probability obtained by subtracting the first probability from 1;
updating the value of the first state variable selected from candidates determined by the first process; and
updating the value of a second state variable whose change is accepted by the second process.

12. A data processing method comprising:

storing, by storage means (11), evaluation function information (11a) on an evaluation function including a plurality of state variable groups for a combinatorial optimization problem; and

in executing, by processing means (12), a plurality of trials each of which is to change a value of one state variable included in the plurality of state variable groups,

performing, based on the evaluation function information, a first process of determining a candidate for a first state variable whose value is to be changed in parallel for each of the plurality of state variable groups, in each trial, the first process being performed with a first probability calculated using a first degree of parallelism corresponding to a number of the plurality of state variable groups;

performing, based on the evaluation function information, a second process of selecting one second state variable and determining whether to accept a change in a value of the one second state variable in parallel for each of the plurality of state variable groups, in each trial, the second process being performed with a second probability obtained by subtracting the first probability from 1;

updating the value of the first state variable selected from candidates determined by the first process; and

updating the value of a second state variable whose change is accepted by the second process.

13. A computer-readable storage medium having the computer program of claim 11 stored thereon.

FIG. 1

FIG. 2

20

22a1       22a2       22aM

| ARITHMETIC PROCESSING CIRCUIT | ARITHMETIC PROCESSING CIRCUIT | ...... | ARITHMETIC PROCESSING CIRCUIT |

SECONDARY SELECTION CIRCUIT

23

| OVERALL CONTROL CIRCUIT | SAMPLE ACQUISITION CIRCUIT |

24

21

FIG. 3

21

OVERALL CONTROL CIRCUIT

$r \leq \rho \rightarrow$ mode = 1 : RF SELECTION
$r > \rho \rightarrow$ mode = 0 : METROPOLIS SELECTION

21a

$\rho$    21b

RANDOM
NUMBER
GENERATOR

r

COMPARATOR

mode

22a1

ARITHMETIC
PROCESSING CIRCUIT
($i = 1$ to $n$)

j

22b1

PRIMARY SELECTION CIRCUIT

SCORE

j

Update
1: accept
0: reject

T

22c1

$\Delta E_i$

UPDATE CIRCUIT

j, $\Delta x_j$

FIG. 4

j, $\Delta x_j$

22c1

UPDATE CIRCUIT
(i = 1 to n)

$\Delta x_j$      j      $\Delta x_j$      0
                                            j

$W_{ij}$      i=j    i≠j

22d1      22d6

×      +      22d7

22d2      $W_{ij}\Delta x_j$

$\Delta x_i$      +      22d5

$\Delta E$
CALCULATION
CIRCUIT      $h_i$      22d3      $x_i$      22d8

22d4

$\Delta E_i$

22c2

UPDATE CIRCUIT
(i = n+1 to 2n)

· · · · · ·

22cM

UPDATE CIRCUIT
(i = (M−1)n+1 to Mn)

FIG. 5

FIG. 6

| MODE SWITCHING CONTROL | mode=0 | mode=1 | | | | mode=0 | mode=0 | mode=1 | | | | mode=0 |
|---|---|---|---|---|---|---|---|---|---|---|---|---|
| | S1 | R1 | R2 | | Rn | S2 | S3 | R1 | R2 | | Rn | S4 |
| VARIABLE SELECTION PROCESS  1 | Serial | RF | RF | ······ | RF | Serial | Serial | RF | RF | ······ | RF | Serial |
| 2 | Serial | RF | RF | ······ | RF | Serial | Serial | RF | RF | ······ | RF | Serial |
| ⋮ | | | | | | | | | | | | |
| M | Serial | RF | RF | ······ | RF | Serial | Serial | RF | RF | ······ | RF | Serial |
| SECONDARY SELECTION PROCESS | S1-2 | | | | R2-2 | S2-M | S3-2 | | | | Rn-1 | S4-1 |
| UPDATE PROCESS | Update | | | | Update | Update | Update | | | | Update | Update |

t1    t2         t3    t4    t5    t6         f7    f8    f9

## FIG. 7

START

INITIALIZATION — S10

REPLICA LOOP — S11

ITERATION LOOP — S12

SELECTION AND UPDATE OPERATION — S13

ITERATION LOOP — S14

REPLICA LOOP — S15

IS TERMINATION CONDITION SATISFIED? — S16

NO

YES

END

FIG. 8

SELECTION CONTROL

GENERATE r — S20

S21

$r \leq \rho$ ? — YES

NO — S23

S22

mode←0

mode←1

j←j+1 — S24

SEND j AND mode — S25

END

FIG. 9

FIG. 10

START

SET j AND mode — S40

$Update_i \leftarrow 0$ — S41

S42

mode = 1? — YES → CALCULATE $\alpha_i$ — S43

NO

METROPOLIS SELECTION FOR j — S47

RF LOOP — S44

ACCEPT TRANSITION? — S48

RF SELECTION — S45

NO

YES

RF LOOP — S46

$Update_i \leftarrow 1$ — S49

END

# FIG. 11

FIG. 12

FIG. 13

START

INITIALIZATION — S50

IS UPDATE CONDITION FOR $\rho$ SATISFIED? — S51

NO

YES

UPDATE $\rho$ (INCREASE $\rho$) — S52

REPLICA LOOP — S53

ITERATION LOOP — S54

SELECTION AND UPDATE OPERATION — S55

ITERATION LOOP — S56

REPLICA LOOP — S57

IS TERMINATION CONDITION SATISFIED? — S58

NO

YES

END

FIG. 14

UPDATE CONTROL

S60

mode = 1?

NO

YES S61

S65 $w \leftarrow w+1$

$w \leftarrow (\text{SUM OF } \alpha_i)^{-1}$

S62

CAUSE $x_j$ TO BE UPDATED

S66 NUMBER OF ACCEPTANCES $\geq 1$?

NO

YES

S63 OTUPUT w AND y

S67 IN INITIAL RELAXATION PHASE?

YES

S68

NO

CAUSE EACH ACCEPTED STATE VARIABLE TO BE SELECTED AND UPDATED

S69 CAUSE ONE TO BE RANDOMLY SELECTED AND UPDATED

S64 $w \leftarrow 0$

S70 OTUPUT w AND y

S71 $w \leftarrow 0$

END

FIG. 15

40

42a1   42a2      42am

| ARITHMETIC PROCESSING CIRCUIT | ARITHMETIC PROCESSING CIRCUIT | · · · · · · | ARITHMETIC PROCESSING CIRCUIT |

· · · · · ·

SECONDARY
SELECTION CIRCUIT

43

OVERALL
CONTROL CIRCUIT

41

FIG. 16

ONE-HOT
VARIABLES (k bits)

ONE-HOT
VARIABLES (k bits)

ONE-HOT
VARIABLES (k bits)

mode

mode

mode

42b1

42b2

42bm

## FIG. 17

42c1

42d1

42cm

$j, \Delta x_j$

UPDATE CIRCUIT

ONE-HOT VARIABLE
UPDATE CIRCUIT

42e1

$\Delta$E CALCULATION
CIRCUIT

...

UPDATE CIRCUIT

FIG. 18

FIG. 19

FIG. 20

| | Europäisches Patentamt European Patent Office Office européen des brevets | **EUROPEAN SEARCH REPORT** | **Application Number** EP 25 21 8049 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WONSIK KIM ET AL: "Markov Chain Monte Carlo combined with deterministic methods for Markov random field optimization", 2009 IEEE CONFERENCE ON COMPUTER VISION AND PATTERN RECOGNITION : CVPR 2009 ; MIAMI [BEACH], FLORIDA, USA, 20 - 25 JUNE 2009 IEEE, PISCATAWAY, NJ, [Online] 20 June 2009 (2009-06-20), pages 1406-1413, XP031514139, DOI: 10.1109/CVPRW.2009.5206504 ISBN: 9781424439928 [retrieved on 2026-03-11] * alg. 3, secs. 4.1 and 5, eqs. (1) and (7) * | 1-13 | INV. G06F17/11 G06N5/01 G06N7/01 |
| A | Tappenden Rachael ET AL: "Separable Approximations and Decomposition Methods for the Augmented Lagrangian", arXiv.org, 30 August 2013 (2013-08-30), pages 1-28, XP093385190, Retrieved from the Internet: URL:https://arxiv.org/pdf/1308.6774 [retrieved on 2026-04-09] * alg. 2 * | 1-13 | |
| | | | TECHNICAL FIELDS SEARCHED (IPC) |
| | | | G06F G06E G06N |
| A | GUANXUN LI ET AL: "Importance is Important: Generalized Markov Chain Importance Sampling Methods", 2 October 2024 (2024-10-02), ARXIV.ORG CORNELL UNIVERSITY LIBRARY, 201 OLIN LIBRARY CORNELL UNIVERSITY ITHACA, NY 14853, XP091895097, * algs. 5 and 6 * | 1-13 | |

-/--

The present search report has been drawn up for all claims

| Place of search | Date of completion of the search | Examiner |
|---|---|---|
| The Hague | 23 April 2026 | Karaliolios, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 25 21 8049

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KITCHEN NATHAN ET AL: "A Markov Chain Monte Carlo Sampler for Mixed Boolean/Integer Constraints", 26 June 2009 (2009-06-26), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER] SPRINGER, BERLIN, HEIDELBERG, PAGE(S) 446 - 461, XP047444863, ISSN: 0302-9743 ISBN: 9783540745495 * alg. 1 * ----- | 1-13 | |

TECHNICAL FIELDS
SEARCHED      (IPC)

The present search report has been drawn up for all claims

| Place of search | Date of completion of the search | Examiner |
|---|---|---|
| The Hague | 23 April 2026 | Karaliolios, N |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
............................................................................................
& : member of the same patent family, corresponding
   document

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022174616 A

- JP 2023149806 A